(19) Europäisches Patentamt
European Patent Office
Office européen des brevets

(11) Veröffentlichungsnummer: **0 132 679**
**A2**

# (12) EUROPÄISCHE PATENTANMELDUNG

(21) Anmeldenummer: **84108001.3**

(22) Anmeldetag: **09.07.84**

(51) Int. Cl.⁴: **C 08 F 8/12**

(30) Priorität: **20.07.83 DE 3326187**

(43) Veröffentlichungstag der Anmeldung:
**13.02.85 Patentblatt 85/7**

(84) Benannte Vertragsstaaten:
**CH DE FR GB LI**

(71) Anmelder: **BAYER AG**
**Konzernverwaltung RP Patentabteilung**
**D-5090 Leverkusen 1 Bayerwerk(DE)**

(72) Erfinder: **Bartl, Herbert, Dr.**
**Eichendorffweg 10**
**D-5068 Odenthal(DE)**

(72) Erfinder: **Schröer, Wolf-Dieter, Dr.**
**Christian-Hess-Strasse 65**
**D-5090 Leverkusen 1(DE)**

## (54) Primäre Aminogruppen enthaltende Copolymere, ihre Herstellung und Verwendung als technische Hilfsmittel.

(57) Es werden neue, primäre Aminogruppen enthaltende Copolymere bereitgestellt. Die neuen Copolymeren wurden durch Hydrolyse von Copolymeren des N- Vinylcarbamidsäuremethylesters mit Comonomeren der Formel

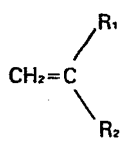 (I)

in Wasser oder überwiegend wasserhaltigem Medium erhalten, wobei

$R^1$ = H oder $CH_3$

$R^2$ = $-OCOCH_3$, $-NR^3-COCH_3$, 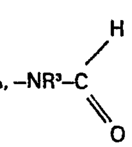

$-COOH$, $-CONH_2$,

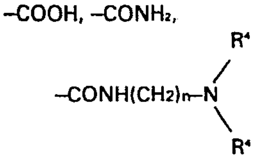 oder 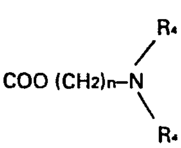

und wobei

$R^3$ = H, $CH_3$ oder $C_2H_5$
$R^4$ = $CH_3$ oder $C_2H_5$ und
n = 2 oder 3.

Die neuen Copolymere werden in Form wäßriger Lösungen als technische Hilfsmittel und vorzugsweise als Flockungsmittel, Papierhilfsmittel, Textilhilfsmittel und als Hilfsmittel für die Erdölförderung verwendet.

EP 0 132 679 A2

BAYER AKTIENGESELLSCHAFT
Konzernverwaltung RP
Patentabteilung

5090 Leverkusen, Bayerwerk

Er/by-c

# Primäre Aminogruppen enthaltende Copolymere, ihre Herstellung und Verwendung als technische Hilfsmittel

Die Erfindung betrifft neue primäre Aminogruppen enthaltende Copolymere, die durch Hydrolyse von Copolymeren des N-Vinylcarbamidsäuremethylesters in wäßrigem Medium erhalten werden, das Verfahren zu ihrer Herstellung sowie ihre Verwendung als technische Hilfsmittel.

Die Überführung der Carbamate in die Aminofunktion hat zur Voraussetzung, daß die polymergebundenen Carbamidsäureester leicht und vollständig verseifbar sind. In der Literatur herrscht die Meinung vor, daß dies in befriedigendem Maße nur auf Benzylester (R. Hart, G. Polymer bie 29 (1958) 629) und in besonderem Maße auf t-Butylester (R. Hart, Makromolekulare Chem. 32 (1959) 51) zutrifft. Die Verseifung von polymerisiertem N-Vinylcarbamidsäureisopropylester gelingt nur in Bromwasserstoff-Eisessig quantitativ, nicht jedoch in wäßrigen Säuren (W. Storck und G. Manecke, Makromolekulare Chem. 110 (1967) 210).

Die Belgische Patentschrift Nr. 560 219 beschreibt die Copolymerisation von Benzyl-(N-vinyl)carbamat und Vinylacetat im Molverhältnis 1:1 in Benzol und die anschließende Spaltung der Carbamatgruppen in einer Mischung aus Eisessig und Bromwasserstoff unter Wasserausschluß. Bei der Polymerisation entstehen relativ niedermolekulare Copolymerisate. Nach der Freisetzung der Aminogruppen muß das Copolymer in umständlicher Weise von Spaltprodukten getrennt werden.

Es wurde nun überraschenderweise gefunden, daß sich bestimmte Copolymere des N-Vinylcarbamidsäuremethylesters besonders leicht im wäßrigen oder im überwiegend wasserhaltigen Medium zu Copolymeren verseifen lassen, die primäre Aminogruppen enthalten.

Gegenstand der Erfindung sind daher neue, primäre Aminogruppen enthaltende Copolymere, dadurch gekennzeichnet, daß sie durch Hydrolyse von Copolymeren des N-Vinylcarbamidsäuremethylesters in wäßrigem oder überwiegend wasserhaltigem Medium erhalten werden, das Verfahren zu ihrer Herstellung und ihre Verwendung als technische Hilfsmittel.

Die leicht verseifbaren Copolymeren werden durch Copolymerisation des N-Vinylcarbamidsäuremethylesters mit polaren Monomeren der Formel (I) erhalten,

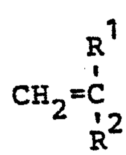

(I)

worin

$R^1$ = H oder $CH_3$,

$R^2$ = $-OCOCH_3$, $-NR^3-COCH_3$, $-NR^3-COH$, $-CO_2H$, $-CO-NH_2$,

$-CONH(CH_2)_n\overset{R^4}{\underset{R^4}{N}}$ oder $-COO(CH_2)_n\overset{R^4}{\underset{R^4}{N}}$

und wobei

$R^3$ = H, $CH_3$ oder $C_2H_5$

$R^4$ = $CH_3$ oder $C_2H_5$ und

n = 2 oder 3.

Im einzelnen seien als Comonomere zum N-Vinylcarbamidsäuremethylester Vinylacetat, Vinylformamid, N-Methylvinylformamid, Vinylacetatamid, N-Methylvinylacetamid, Acrylsäure, Methacrylsäure, Acrylamid, Methacrylamid, N,N-Dimethylaminoethylacrylamid, N,N-Dimethylaminoethylmethacrylamid, N,N-Dimethylaminoethylacrylat und N,N-Dimethylaminoethylmethacrylat genannt.

Es ist auch möglich, Gemische dieser Comonomeren zu verwenden.

Im Rahmen der Formel (I) bevorzugt sind Vinylverbindungen der Formel (II)

$$CH_2=CH-R^5 \qquad (II)$$

worin

$R^5$ = $-OCOCH_3$, $-NCH_3-COCH_3$, $-CO_2H$ oder $-CONH_2$ bedeutet.

Besonders bevorzugt ist Vinylacetat.

Das Verhältnis der Comonomeren zum N-Vinylcarbamidsäuremethylester kann in weiten Grenzen variiert werden. Die leichte Verseifbarkeit in wäßrigen Medien ist gewährleistet, wenn der Gehalt an N-Vinylcarbamidsäuremethylester im Copolymeren geringer als 70 Mol-% ist, vorzugsweise jedoch weniger als 50 Mol-% beträgt. Besonders bevorzugt sind Copolymere, die weniger als 30 Mol-% N-Vinylcarbamidsäuremethylester enthalten.

Zur Hydrolyse werden die Copolymeren, vorzugsweise in verdünnten Säuren bei Temperaturen von 40°C bis 160°C gerührt. Bevorzugt wird ein Temperaturbereich von 70°C bis 130°C insbesondere der Temperaturbereich von 85°C bis 115°C angewendet. Dabei gehen sie, sofern sie ungelöst waren, unter Gasentwicklung in Lösung. Die Löslichkeit der hydrolysierten Produkte ist im wesentlichen von der Zusammensetzung der Copolymeren, der Temperatur und vom pH-Wert der Lösung abhängig.

Die Hydrolyse erfolgt gewöhnlich in wäßrigen Mineralsäuren wie z.B. Salzsäure, Bromwasserstoffsäure, Schwefelsäure oder Phosphorsäure. Es können aber auch

wäßrige Lösungen von Carbonsäuren wie Ameisensäure, Essigsäure, Propionsäure oder Buttersäure verwendet werden. Die Säuremenge wird so bemessen, daß sie wenigstens den freizusetzenden primären Aminogruppen äquivalent ist. Ein Überschuß ist nicht erforderlich, er kann aber zur Beschleunigung der Reaktion von Vorteil sein. Die Säurekonzentration kann 0,5 bis 30 Gew.-% der wäßrigen Phase betragen. Vorzugsweise werden 5 bis 10 %ige wäßrige Säurelösungen zur Hydrolyse verwendet.

Bei Säurefunktionen enthaltenden Copolymeren kann auf den Zusatz von Säuren verzichtet werden. Sie hydrolysieren autokatalytisch.

Die Mengen von wäßriger Phase und Copolymer werden so bemessen, daß Lösungen mit einem Festgehalt von wenigstens 1 Gew.-% entstehen. Der Festgehalt ist durch die Viskosität der Polymerlösungen begrenzt und damit vom Molgewicht der Copolymeren abhängig.

Vorzugsweise werden bei der Hydrolyse Festgehalte von 5 bis 30 Gew.-% eingestellt.

Um die Hydrolyse weiter zu beschleunigen, kann es von Vorteil sein, zusätzlich einen Lösungsvermittler zur wäßrigen Phase zu geben, der entweder in ihr verbleibt oder nach Beendigung der Hydrolyse wieder abdestilliert wird. Als Lösungsvermittler kommen z.B. Alkohole wie beispielsweise Methanol, Ethanol, n-Propanol, i-Propanol, Butanol-1, Butanol-2 oder tert.-Butanol, Glykole oder

Glykolether wie z.B. Ethylenglykol, Diethylenglykol, Triethylenglykol, n-Butylglykol, Ketone wie beispielsweise Aceton, Methylethylketon, Säureamide wie N,N'-Dimethylformamid, N,N-Dimethylacetamid, N-Methylformamid oder Formamid oder auch Dimethylsulfoxid in Betracht. Die Lösungsvermittlermenge beträgt gegebenenfalls bis zu 30 Gew.-% der wäßrigen Phase, bevorzugt jedoch weniger als 12 Gew.-%.

Das hydrolysierte Mischpolymerisat kann auf verschiedenen Wegen isoliert werden. Gelegentlich fällt es als in saurem Milieu bei Raumtemperatur oder erhöhter Temperatur unlösliche Substanz an. Im wäßrigen Medium lösliche Hydrolysate können durch Abdestillieren des Lösungsmittels oder durch Fällung isoliert werden. Vorzugsweise wird das Polymer jedoch in wäßriger Lösung isoliert.

Die erfindungsgemäßen Hydrolysate eignen sich in überragender Weise als Flockungsmittel bei der Abwasseraufbereitung, als Hilfsmittel bei der Papierherstellung zur Verbesserung der Füllstoffretention, als Textilhilfsmittel, als Verdickungsmittel, als Schutzkolloide und Dispergiermittel für Emulsions- oder Suspensionspolymerisationen, zur Fixierung und Komplexierung von Metallionen, zur Immobilisierung von Enzymen, als Vernetzungshilfsmittel z.B. in Gelatine, als "Peptiziser" für Silberhalogenidemulsionen und als Hilfsmittel für die Erdölförderung.

Der Gegenstand der Erfindung sei im folgenden an einigen Beispielen im einzelnen näher erläutert.

Copolymer I

In einem 500 ml Dreihalskolben mit Thermometer werden unter schwacher Stickstoffbegasung (ca. 2 ltr./h) 30 Gew.-Teile N-Vinylcarbamidsäuremethylester und 70 Gew.-Teile Vinylacetat in 150 Gew.-Teilen tert.-Butanol bei 30°C gelöst. Zu der Lösung fügt man 0,5 Gew.-Teile Porofor N(Azoisobuttersäuredinitril) und erhitzt unter weiterer Stickstoffbegasung 10 Stunden auf 65°C.

Es entsteht eine hochviskose klare Lösung. Ein aufgetrockneter Film ist ebenfalls klar und thermoplastisch. Die Lösung wird mit 500 ml Petrolether gefällt, und das ausgefallene Polymerisat mit ca. 500 ml Petrolether gewaschen und bei 60°C getrocknet. Man erhält 82 Gew.-Teile eines weißen körnigen Copolymerisates (= 82 % Gesamtumsatz). Das Produkt läßt sich bei 170°C und 200 bar zu klaren Platten verpressen. Nach der Stickstoffanalyse betrug der Gehalt an Vinylurethan im Polymerisat 31,7 Gew.-%. Die Grenzviskositätszahl, gemessen in Tetrahydrofuran, betrug 1,2 dl/g.

Copolymer II

Gemäß Beispiel 1 wurden 50 Gew.-Teile N-Vinylcarbamidsäuremethylester und 50 Gew.-Teile Vinylacetat in 150 Gew.-Teilen tert.-Butanol umgesetzt. Nach der Ausfällung erhielt man 90 Gew.-Teile Polymerisat mit einer Grenzviskositätszahl von 1,05 dl/g (gemessen in Dimethylformamid). Nach der Stickstoffanalyse betrug der N-Vinylcarbamidsäuremethylesteranteil 44,5 Gew.-%.

Copolymer III

Gemäß Beispiel 1 wurden 5 Gew.-Teile N-Vinylcarbamidsäuremethylester und 95 Gew.-Teile Vinylacetat in 150 Gew.-Teilen tert.-Butanol umgesetzt. Nach der Ausfällung erhielt man 88 Gew.-Teile Polymerisat mit einer Grenzviskositätszahl von 1,05 dl/g (in Dimethylformamid). Nach der Stickstoffanalyse betrug der N-Vinylcarbamidsäuremethylesteranteil 6,3 Gew.-%.

Copolymer IV

Gemäß Beispiel 1 wurden 20 Gew.-Teile N-Vinylcarbamidsäuremethylester und 20 Gew.-Teile Acrylamid in 300 Gew.-Teilen tert.-Butanol unter Zusatz von 0,4 Gew.-Teilen Cyclohexylperoxydicarbonat 8 h bei 35°C polymerisiert. Das ausgefallene Produkt wurde abgesaugt, mit 100 Gew.-Teilen tert.-Butanol gewaschen und bei 60°C 48 h im Vakuumschrank getrocknet. Es wurden 35 Gew.-Teile eines weißen pulverförmigen Polymerisates erhalten mit einem N-Vinylcarbamidsäuremethylesteranteil von 42 Gew.-%. Die Grenzviskosität des Polymeren in 0,9 %iger NaCl-Lösung betrug 0,405 dl/g.

Copolymer V

Gemäß der Verfahrensweise von Beispiel 1 wurden 20 Gew.-Teile N-Vinylcarbamidsäuremethylester und 20 Gew.-Teile Acrylsäure in 300 Gew.-Teilen tert.-Butanol unter Zusatz von 0,5 Gew.-Teilen Cyclohexylperoxydicarbonat 8 h bei 35°C polymerisiert.

Nach Fällung mit 1000 Gew.-Teilen Petrolether erhielt man 38 Gew.-Teile Polymerisat mit einer Grenzviskosität von 0,556 dl/g in Dimethylformamid. Der aus der Stickstoffanalyse ermittelte Gehalt an N-Vinylcarbamidsäuremethylester betrug 37,6 Gew.-%.

Homopolymer VI

Gemäß Beispiel 1 wurden 100 Gew.-Teile N-Vinylcarbamidsäuremethylester in 250 Gew.-Teilen tert.-Butanol umgesetzt. Nach Ausfällung erhält man 96 Gew.-Teile an Poly-N-vinylcarbamidsäuremethylester mit einer Grenzviskositätszahl von 1,3 dl/g (gemessen in Dimethylformamid).

Hydrolysat 1

180 Gew.-Teile Copolymer I wurden in einem Rührkolben mit Rückflußkühler in 1075 Gew.-Teile 4 %iger Salzsäure unter Stickstoff 6 Stunden bei 95-97°C gerührt. Dabei entsteht unter Gasentwicklung eine homogene Lösung mit einem Feststoffgehalt von 8,3 %. Die Grenzviskosität des Polymeren in 0,9 %iger NaCl-Lösung betrug 2,60 dl/g.

Hydrolysat 2

130 Gew.-Teile Copolymer II wurden in einem Rührkolben mit Rückflußkühler in 486 Gew.-Teile 4 %iger Salzsäure unter Stickstoff 6 Stunden bei 97-100°C gerührt. Dabei entstanden unter Gasentwicklung 636 Gew.-Teile homogene Lösung mit einem Feststoffgehalt von 13,4 %. Die Grenzviskosität des Polymeren in 0,9 %iger NaCl-Lösung betrug 1,70 dl/g.

Hydrolysat 3

120 Gew.-Teile Copolymer III wurden in einem Rührkolben mit Rückflußkühler in 560 Gew.-Teile 4 %iger Salzsäure unter Stickstoff 6 Stunden bei 95-97°C gerührt. Dabei entstanden unter Gasentwicklung 654 Gew.-Teile homogene Lösung, die einen Feststoffgehalt von 11,8 % aufweist. Die Grenzviskosität des Polymeren in 0,9 %iger NaCl-Lösung betrug 0,76 dl/g.

Hydrolysat 4

20 Gew.-Teile Copolymer I wurden in 105 Gew.-Teile 5 %iger Schwefelsäure unter Stickstoff 5 Stunden bei 95-100°C gerührt. Die homogene Lösung wurde in 400 ml Ethanol eingerührt. Es wurden 14,0 Gew.-Teile (87 %) farbloses Pulver abgesaugt. Die Grenzviskosität in 0,9 %iger NaCl-Lösung betrug 2,03 dl/g.

Hydrolysat 5

12 Gew.-Teile Copolymer IV wurden in 60 Gew.-Teile 8,7 %iger Salzsäure unter Stickstoff 4 Stunden bei 95-98°C gerührt. Die homogene Lösung wurde in 2000 ml Aceton eingerührt und 11,2 Gew.-Teile gefälltes Polymer abgesaugt. Grenzviskosität in DMF 0,619 dl/g.

Hydrolysat 6

12 Gew.-Teile Copolymer IV wurden in 60 Gew.-Teile

1 %ige Salzsäure unter Stickstoff 6 Stunden bei 60-65°C gerührt. Die homogene Lösung wurde in 2000 ml Aceton eingerührt und 11,8 Gew.-Teile gefälltes Polymer abgesaugt.

Hydrolysat 7

12 Gew.-Teile Copolymer IV wurden in 60 Gew.-Teile 1,6 %iger Ameisensäure unter Stickstoff 6 Stunden bei 70-75°C gerührt. Die homogene Lösung wurde in 2000 ml Aceton eingerührt und 10,8 Gew.-Teile gefälltes Polymer abgesaugt.

Hydrolysat 8

12 Gew.-Teile Copolymer V wurden in 60 Gew.-Teile Wasser unter Stickstoff 7 Stunden bei 90-95°C gerührt. Beim Abkühlen fielen 6,6 Gew.-Teile Polymer aus der wäßrigen Lösung aus.

Hydrolysat 9

12 Gew.-Teile Homopolymer VI wurden in 60 Gew.-Teilen 8,5 %iger Salzsäure unter Stickstoff bei 95-98°C gerührt. Die anfängliche Gasentwicklung war nach wenigen Stunden beendet und es bildete sich ein Gel, daß sich auch nach 48 Stunden bei 98-100°C nicht gelöst hatte.

Patentansprüche

1. Primäre Aminogruppen enthaltende Copolymere, erhältlich durch Hydrolyse von Copolymeren des N-Vinylcarbamidsäuremethylesters mit Comonomeren der Formel

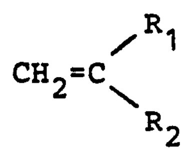

(I)

worin

$R^1$ = H oder $CH_3$,

$R^2$ = $-OCOCH_3$, $-NR^3-COCH_3$, $-NR^3-C\overset{O}{\underset{H}{}}$ , $-CO_2H$, $-CONH_2$, $-CONH(CH_2)_n\overset{R^4}{\underset{R^4}{N}}$ oder $-COO(CH_2)_n\overset{R^4}{\underset{R^4}{N}}$

und wobei

$R^3$ = H, $CH_3$ oder $C_2H_5$,

$R^4$ = $CH_3$ oder $C_2H_5$ und

n = 2 oder 3,

in Wasser oder im überwiegend wasserhaltigen System.

2. Copolymere gemäß Anspruch 1, dadurch gekennzeichnet, daß sie durch Hydrolyse von Copolymeren des N-Vinylcarbamidsäuremethylesters mit Comonomeren der Formel

$$CH_2{=}CH{-}R^5 \qquad (II)$$

worin

$R^5$ = $-OCOCH_3$, $-N(CH_3)-COCH_3$, $-COOH$, $-CONH_2$,

erhalten werden.

3. Copolymere gemäß Anspruch 1, dadurch gekennzeichnet, daß sie durch Hydrolyse von Copolymeren des N-Vinylcarbamidsäuremethylesters mit Vinylacetat erhalten werden.

4. Copolymere gemäß Anspruch 1-3, dadurch gekennzeichnet, daß die verseifbaren Copolymeren weniger als 70 Mol-% N-Vinylcarbamidsäuremethylester enthalten.

5. Copolymere gemäß Anspruch 1-3, dadurch gekennzeichnet, daß die verseifbaren Copolymeren weniger als 50 Mol-% N-Vinylcarbamidsäuremethylester enthalten.

6. Copolymere gemäß Anspruch 1-3, dadurch gekennzeichnet, daß die verseifbaren Copolymeren weniger als 30 Mol-% N-Vinylcarbamidsäuremethylester enthalten.

7. Verfahren zur Herstellung von Copolymeren gemäß Anspruch 1-3, dadurch gekennzeichnet, daß die Hydrolyse in verdünnten, wäßrigen Säuren bei Temperaturen von 40-160°C durchgeführt wird.

8. Verfahren gemäß Anspruch 7, dadurch gekennzeichnet, daß die Hydrolyse bei Temperaturen von 70-130°C durchgeführt wird.

9. Verfahren gemäß Anspruch 7, dadurch gekennzeichnet, daß die Hydrolyse bei Temperaturen von 85-115°C durchgeführt wird.

10. Verwendung der Copolymeren gemäß Anspruch 1 bis 6 in Form wäßriger Lösungen als technische Hilfsmittel und vorzugsweise als Flockungsmittel, Papierhilfsmittel, Textilhilfsmittel und als Hilfsmittel für die Erdölförderung.